# EUROPEAN PATENT APPLICATION

(11) **EP 3 308 649 A1**
(43) Date of publication of application: **18.04.2018**
(21) Application number: 17382653.8
(22) Date of filing: 02.10.2017
(51) Int. Cl.: A21D 2/18, A21D 2/36, A21D 2/38, A21D 13/04, A21D 13/066, A21D 13/045, A21D 13/41, A21D 13/047, A23L 33/00, A23L 33/21

(54) **GLUTEN-FREE BREAD-MAKING COMPOSITION**

(30) Priority: 11.10.2016 ES 201631316
(71) Applicant: Deprove, S. L., 28770 Colmenar Viejo (ES)
(72) Inventor: TEDESCO, Laura, 28770 Colmenar Viejo (ES)
(74) Representative: Gallego Jiménez, José Fernando

(57) **Abstract**

The present invention relates to a gluten-free breadmaking composition. Such composition comprises a combination essentially consisting of glutinous rice flour, hydroxypropylmethylcellulose, psyllium husk flour (*Psyllium*) and flaxseed flour. It also relates to the use of this combination for preparing foods for people intolerant to gluten, in particular for celiac people, and to a bakery product comprising the mentioned combination.

## Description

### Technical field

The present invention relates to a composition which is used for the preparation of gluten-free foods suitable for persons intolerant to gluten, in particular for celiac persons, having a high protein value and nutrients.

### State of the art

Gluten is a mixture of proteins, glutelins and gliadins, found in the endosperm of wheat and other cereals such as barley, rye and spelt. Gliadins have been identified as the major component of gluten that is toxic to people with celiac disease (CD).

CD is a form of enteropathy that affects genetically predisposed individuals when they come into contact with foods that contain gluten. This determines the appearance of atrophy of the intestinal villi. As a consequence, a nutrient malabsorption defect can occur (immediate principles, mineral salts and vitamins) leading to various deficiency states responsible for a broad spectrum of clinical manifestations such as osteomalacia (bone softening due to the loss of calcareous salts), digestive ulcers and malignant processes, such as gastrointestinal neoplasia.

CD can appear at any age of life and causes very varied clinical manifestations, although in many cases the disease is asymptomatic.

The global prevalence of CD is estimated to be 1/266, and in Spain it ranges from 1/118 in the infant population to 1/389 in the adult population.

In addition to people suffering from CD, there are people who are intolerant to gluten, whose percentage is increasing. According to the review article by Mansueto et al., Non-Celiac Gluten Sensitivity: Literature Review, J. Am. Coll. Nutrition, 2014, 33 (1), 39-54, one of the factors that has possibly contributed to the increase of the gluten-sensitive population has been the use of new types of wheat, enriched in gluten.

The early diagnosis of CD, followed by its treatment by the elimination of gluten from the diet, leads to clinical and histological improvement. A gluten-free diet is the basis of the treatment and the safe management of CD.

The increase in gluten-sensitive people has resulted in an increase in the commercial offer of gluten-free products. These products do not contain gluten-containing cereal flours, but are mainly based on flours from rice, corn, millet, quinoa, buckwheat, amaranth, chickpea, soybeans, lupine, and may also contain almond or chestnut flour.

The gluten content in wheat flour provides organoleptic characteristics appropriate for numerous food products, such as texture and taste, which are more difficult to achieve with gluten-free flours, in particular, in bread and related products. Gluten also provides advantages in the manufacturing process. Thus, in the state of the art numerous technical solutions have been described for gluten-free products to make their texture and taste more similar to that of products prepared with gluten flours.

Thus, the French patent application FR-A-2765076 discloses gluten-free bread comprising specific amounts of potato starch and/or rice flour; thickener, preferably, alginate, xanthan gum, guar gum, carrageenan, HPMC, or a mixture thereof; emulsifier; fatty matter; fresh yeast; sugar and salt.

The international patent application WO-A-2007/137578 discloses powdery compositions for preparing gluten-free doughs for bread-making which comprise a gelling agent derived from plants, a leavening agent, a foaming component and one or more types of flour. The gelling agent is preferably selected from seeds, bran or psyllium husk; and the foaming component is preferably egg albumin.

The international patent application WO-A-2010/103158 discloses a novel formulation for the preparation of gluten-free foods comprising specific amounts of gluten-free flour and/or starch, preferably rice flour, lupine flour, corn flour, or a mixture thereof, preferably rice starch, corn starch, tapioca starch, or a mixture thereof; sugar; common salt; thickener, preferably hydroxypropylmethylcellulose (HPMC); and fresh pressed yeast.

The international patent application WO-A-2016/042178 discloses a gluten- and lactose-free baking product which, for the main dough, comprises specific amounts of: water, tapioca starch, rice flour, corn starch, sourdough, sunflower oil, egg white, enzymatically active soy flour, fresh yeast, dextrose, salt, HPMC, psyllium husk fibre, xanthan gum. The sourdough comprises specific amounts of: wholemeal millet flour and/or sorghum flour, water, amaranth flour, salt, and homofermentative lactic bacteria.

Specific developments have also been made to find a substitute for gluten in bread production.

In the doctoral thesis B. Miñarro, Development of gluten free bread formulations, Universitat Autònoma de Barcelona, 2013, numerous studies about hydrocolloids suitable to substitute gluten in gluten-free bread are mentioned. Among the hydrocolloids are alginate, xanthan gum, HPMC, guar gum, pectin, carrageenans, gelatin, konjac gum, arabic gum, tragacanth gum, carboxymethylcellulose (CMC), and combinations thereof. Such hydrocolloids are combined with gluten-free flours such as rice, corn, soy, chestnut, chia, or with potato, corn, cassava starches.

In Haque et al., Combined use of ispaghula and HPMC to replace or augment gluten in breadmaking, Food Res. Int., 1994, 27, 379-393, it is disclosed that it is possible to obtain bread with a degree of aeration analogous to that of the bread made with commercial wheat, by using rice flour and the combination two structuring agents: HPMC and psyllium husk flour (*Plantago ovata*)*.*

Gluten-free bakery products are available on the market, as well as gluten-free breadmaking compositions for preparing bread and other baking products at home. Yet, such gluten-free products have poor taste and provide deficient nutrition.

However, despite the different alternatives described so far, there is still a need for a gluten-free breadmaking composition that makes it possible to prepare bread and other bakery products with organoleptic and nutritional characteristics comparable to those of bread made with wheat flour.

### Object of the invention

The object of the present invention is a combination for preparing a gluten-free breadmaking composition.

Another aspect of the invention is the use of such combination for preparing a gluten-free breadmaking composition.

Another aspect of the invention is a gluten-free breadmaking composition comprising such combination.

Another aspect of the invention is a bakery product comprising the combination of the invention.

Another aspect of the invention is a bakery product comprising the breadmaking composition of the invention.

Another aspect of the invention is the use of the breadmaking composition of the invention for preparing a food product.

### Description of the figures

Figure 1

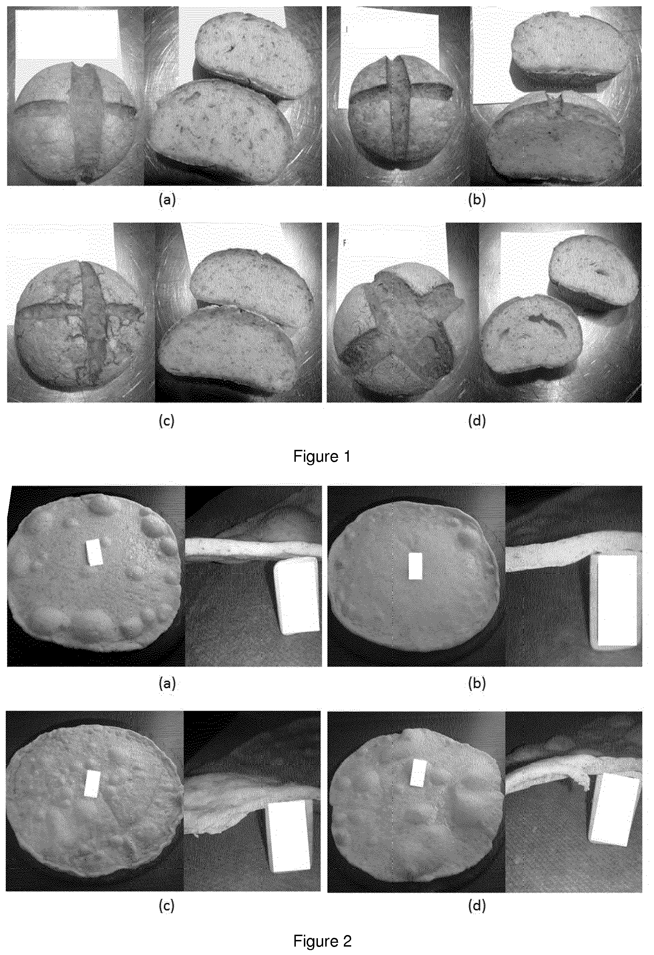

   In Figure 1 (a) the bread obtained in Example 1, section B with a breadmaking composition of the invention is shown. In Figure 1 (b) the bread obtained in Comparative Example 1 by replacing HPMC with corn starch is shown. In Figure 1 (c) the bread obtained in Comparative Example 2 by replacing the psyllium husk flour with corn starch is shown. In Figure 1 (d) the bread obtained in Comparative Example 3 by replacing glutinous rice flour with corn starch is shown.
Figure 2
   In Figure 2 (a) the pizza base obtained in Example 1, section C, with a breadmaking composition of the invention is shown. In Figure 1 (b) the pizza base obtained in Comparative Example 4 by replacing HPMC with corn starch is shown. In Figure 1 (c) the pizza base obtained in Comparative Example 5, by replacing the psyllium husk flour with corn starch is shown. In Figure 1 (d) the pizza base obtained in Comparative Example 6, by replacing the glutinous rice flour with corn starch is shown.
Figure 3

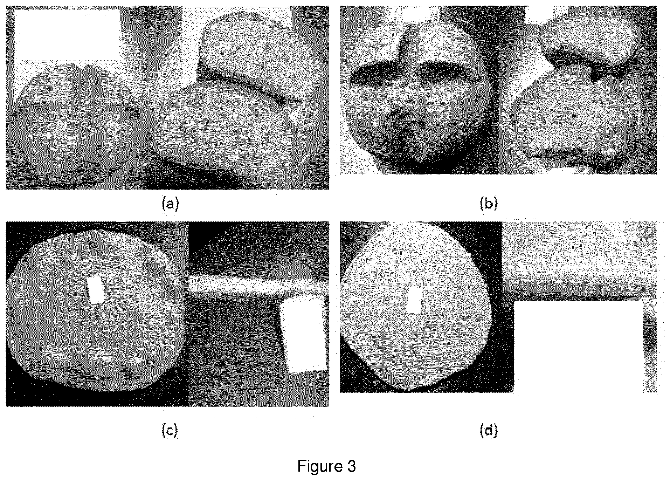

   In Figure 3 (a) the bread obtained in Example 1, section B, with a breadmaking composition of the invention is shown. Figure 3 (b) shows the bread obtained. In Figure 3 (c) the pizza base obtained in Example 1, section C, with a breadmaking composition of the invention is shown. In Figure 3 (d) the pizza base obtained in Comparative Example 7, in which the golden flaxseed flour has been replaced with corn starch, is shown.

### Detailed description of the invention

The object of the present invention is a combination for preparing a gluten-free breadmaking composition essentially consisting of glutinous rice flour, hydroxypropylmethylcellulose, psyllium husk flour and flaxseed flour.

The authors of the present invention have developed a combination which, surprisingly, allows to prepare various breads and other bakery products, such as dough for patties and/or pies, pasta, lasagne, pastries, Mexican tortillas, falafel, or pizza, for example, conveniently by simple mixing with water and oil, without the need for a fermentation process, and having a high nutritional value because it allows the incorporation of a significant amount of vegetable protein, preferably from leguminous proteins, thereto, in a proportion equivalent to food prepared with wheat flour. In addition, the organoleptic properties of the obtained products are substantially analogous to those of the products obtained from wheat flour.

Throughout the present description, unless otherwise specified, the concentrations expressed as percentages always refer to the weight/weight (w/w) percentage, i.e. grams of a given component per 100 g of composition, and the percentages of the different components of a composition are adjusted so that the sum of them is 100%. The term "about" refers to a deviation of plus/minus 10%, preferably plus/minus 5%.

In the present description, as well as in the claims, the singular forms "a" and "the" include the plural reference as well, unless the context clearly indicates otherwise.

### Glutinous rice flour

The combination of the invention contains glutinous rice flour.

Glutinous rice (*Oryza sativa var. Glutinosa* or *Oryza glutinosa*) is also known as sticky rice, sweet rice, brown rice, waxy rice, botan rice, mochi rice or pearl rice. This denomination comes from the fact that when cooked it becomes sticky.

Glutinous rice is gluten-free and practically amylose-free, unlike other rice, and has a high concentration of amylopectin, starch's main component.

Glutinous rice flour is obtained by milling the glutinous rice and is commercially available, for example, through Erawan Marketing Co. Ltd.

### Hydroxypropylmethylcellulose

The combination of the invention includes hydroxypropylmethylcellulose (HPMC).

The HPMC is the 2-hydroxypropyl and methyl ether of cellulose, which has the CAS Registry number 9004-65-3. It is a cellulose whose hydroxyl groups are partially in the form of methyl ether and in the form of 2-hydroxypropyl ether. HPMC is an odourless and tasteless powder.

It is commercially available in various degrees of substitution, for example under the tradenames BENECEL® (Ashland), METHOCEL® (Dow), or TYLOPUR® (Shin-Etsu).

In the combination of the invention, HPMCs having different content of methoxy and 2-hydroxypropoxy groups can be used interchangeably. In the European, Japanese and US pharmacopoeias four specific types are defined, namely, Type 1828 (between 16.5% and 20.0% of methoxy groups, and between 23.0% and 32.0% of 2-hydroxypropoxy groups), Type 2208 (between 19.0% and 24.0% of methoxy groups, and between 4.0% and 12.0% of 2-hydroxypropoxy groups), Type 2906 (between 27.0% and 30.0% of methoxy groups, and between 4.0% and 7.5% of 2-hydroxypropoxy groups), and Type 2910 (between 28.0% and 30.0% of methoxy groups, and between 7.0% and 12.0% of 2-hydroxypropoxy groups). Preferably the type 2208 is used.

### Psyllium husk flour

The combination of the invention includes psyllium husk flour.

The seeds of *Plantago ovata* plant, also known as psyllium or *ispaghula,* include a husk, which contains a high proportion of mucilage, a hygroscopic fibre that has a great capacity to retain liquid.

Psyllium husk flour is obtained by milling the psyllium husk and is available commercially, for example, through the company W. Ratje Froeskaller ApS, or J. Rettenmaier & Söhne GmbH + CO KG.

### Flaxseed flour

The combination of the invention includes flaxseed flour.

The flax plant (*Linum usitatissimum*), also known as linseed, is an herbaceous plant, whose stem can be used to make dresses, and its seeds can be used to obtain flaxseed flour and linseed oil. Flaxseeds can be of the golden or brown types.

The flaxseed flour used in the combination of the invention may be obtained from any of the flaxseeds, preferably from the golden flaxseed, still more preferably deodorized golden flaxseed, and still more preferably with moisture content lower than 10%.

Another aspect of the invention is the use of the combination of the invention for preparing a gluten-free breadmaking composition.

In the combination of the invention, the content of glutinous rice flour is generally comprised between 10% and 55%, preferably between 15% and 50%, more preferably between 20% and 40%, still more preferably between 25% and 35%, and still more preferably about 32% by weight on the total weight of the combination; the HPMC content is generally comprised between 4% and 45%, preferably between 8% and 40%, more preferably between 10% and 35%, still more preferably between 15% and 25%, and still more preferably about 19% by weight on the total weight of the combination; and the content of psyllium husk flour is generally comprised between 4% and 45%, preferably between 6% and 35%, more preferably between 7% and 25%, still more preferably between 10% and 23%, and still more preferably about 13% by weight on the total weight of the combination; and flaxseed flour, preferably golden flaxseed flour, is generally comprised between 20% and 60%, preferably between 25% and 55%, more preferably between 28% and 45%, still more preferably between 30% and 40%, and still more preferably about 35% by weight on the total weight of the combination.

In a preferred embodiment, the combination of the invention comprises between 20% and 40% by weight on the total weight of the combination of glutinous rice flour, between 10% and 35% by weight on the total weight of the combination of hydroxypropylmethylcellulose, between 7% and 25% by weight on the total weight of the combination of psyllium husk flour, and between 28% and 45% by weight on the total weight of the combination of golden flaxseed flour.

### The breadmaking composition

Another aspect of the invention is the breadmaking composition comprising the combination of the invention, gluten-free flour and/or gluten-free starch, leguminous protein, chemical yeast, salt and sugar.

### Gluten-free flour and/or starch

Gluten-free flour is usually selected from the group consisting of rice, preferably white rice, corn, millet, quinoa, buckwheat, amaranth, almond, chestnut, and mixtures thereof.

Gluten-free starch is usually selected from the group consisting of corn, potato, tapioca, and mixtures thereof.

In the breadmaking composition a mixture of gluten-free flour and gluten-free starch is preferably included. In a more preferred embodiment, a combination of white rice flour and corn starch is included.

These gluten-free flours are commercially available.

### Leguminous protein

The composition of the invention allows the incorporation of a significant content of proteins, preferably leguminous protein.

Leguminous protein is usually selected from the group consisting of soy protein, pea protein, chickpea protein, lupine protein, and mixtures thereof. The leguminous protein is generally employed in powder form so that it can be more readily incorporated into the composition of the invention.

Preferably soy protein and/or pea protein is included in the breadmaking composition.

These leguminous proteins are commercially available.

### Other components

The breadmaking composition also comprises chemical yeast, salt and sugar.

Chemical yeast is a chemical product that gives sponginess to the dough due to its ability to release carbon dioxide just like yeasts in the processes of alcoholic fermentation. It is a mixture of an acidic compound (e.g., citric acid, tartaric acid, or disodium phosphate) and a salt of a weak acid or base, generally carbonate or bicarbonate.

In a preferred embodiment, the breadmaking composition also comprises dried baker's yeast from the species *Saccharomyces cerevisiae.*

In a more preferred embodiment the breadmaking composition also comprises minerals, more preferably calcium and magnesium, and vitamins, more preferably selected from the group consisting of vitamin K1, vitamin K2, vitamin D, vitamin D2, vitamin D3, vitamin B12, or a mixture thereof.

The sources of calcium and magnesium are generally salts such as carbonate, bicarbonate, or chloride.

In the breadmaking composition, the content of the combination of the invention is generally comprised between 9% and 27%, preferably between 11% and 20%, and more preferably between 15% and 18% by weight on the total weight of the breadmaking composition.

In the breadmaking composition the gluten-free flour and/or gluten-free starch content is generally comprised between 55% and 70%, preferably between 58% and 68%, and more preferably between 60% and 66% by weight on the total weight of the breadmaking composition.

In the preferred embodiment, when the breadmaking composition comprises gluten-free flour and gluten-free starch, the weight ratio of flour to starch is from 1:5 to 1:7, preferably from 1:5.5 to 1:6.5, and more preferably is about 1:6.

In the breadmaking composition the leguminous protein content is generally comprised between 5% and 15%, preferably between 8% and 12%, and more preferably between 9% and 11% by weight on the total weight of the breadmaking composition.

The breadmaking composition also comprises chemical yeast, salt and sugar, in amounts that the person skilled in the art can conveniently adjust. Generally the chemical yeast content is comprised between 1% and 4%, preferably between 2% and 3% by weight, on the total weight of the breadmaking composition; the chemical salt content is comprised between 1% and 4%, preferably between 2% and 3% by weight on the total weight of the breadmaking composition; the sugar content is comprised between 0.5% and 3%, preferably between 1% and 3% by weight, on the total weight of the breadmaking composition. Likewise, when the breadmaking composition comprises dry baker's yeast of the species *Saccharomyces cerevisiae,* minerals and vitamins, the amounts of these components are suitably adjusted by the person skilled in the art. Typically, the dry baker's yeast content is comprised between 0.5% and 3%, preferably between 1% and 3% by weight, based on the total weight of the breadmaking composition.

The presence of flaxseed flour in the breadmaking composition of the invention contributes to facilitating dough kneading, reducing tackiness, and binding all components when water is incorporated therein.

In a particularly preferred embodiment, the breadmaking composition of the invention comprises the following components:
a) between 50% and 60%, preferably between 53% and 57% by weight of corn starch,
b) between 5% and 15%, preferably between 7% and 10% by weight of white rice flour,
c) between 2% and 8%, preferably between 4% and 7% by weight of glutinous rice flour,
d) between 1% and 6%, preferably between 2% and 4% by weight of HPMC,
e) between 1% and 7%, preferably between 1.5% and 5% by weight of psyllium husk flour,
f) between 2% and 10%, preferably between 4% and 8% by weight of flaxseed flour, preferably from golden flax,
g) between 5% and 15%, preferably between 7% and 12% by weight of soy protein, and
h) appropriate amounts of chemical yeast, salt, sugar, and dried baker's yeast of the species *Saccharomyces cerevisiae,*
wherein the sum of all components is 100%.

In another particularly preferred embodiment, the breadmaking composition of the invention comprises the following components:
a) between 50% and 60%, preferably between 53% and 57% by weight of corn starch,
b) between 5% and 15%, preferably between 7% and 10% by weight of white rice flour,
c) between 2% and 8%, preferably between 4% and 7% by weight of glutinous rice flour,
d) between 1% and 6%, preferably between 2% and 4% by weight of HPMC,
e) between 1% and 7%, preferably between 1.5% and 5% by weight of psyllium husk flour,
f) between 2% and 10%, preferably between 4% and 8% by weight of flaxseed flour, preferably from golden flax,
g) between 5% and 15%, preferably between 7% and 12% by weight of pea protein, and
h) appropriate amounts of chemical yeast, salt, sugar, and dried baker's yeast of the species *Saccharomyces cerevisiae,*
wherein the sum of all components is 100%.

With the composition of the invention, bakery products such as breads, baguettes, loaves, "regañás", pizzas, grissini, foccacia, quiches, biscuits, cakes, muffins, king cake, churros, pasties, pies, falafel, Mexican tortillas, as well as sauces that require thickeners, such as béchamel sauce, and ultimately any preparation that needs gluten flour among its ingredients can be prepared.

For this reason, another aspect of the invention is a bakery product comprising this combination.

Another aspect of the invention is the use of the breadmaking composition of the invention for preparing a food product.

The bread obtained with the breadmaking combination of the invention has an outer crust with a good light golden colour, a good scoring, and the crumb is aerated, soft and, when pressed, it returns.

The pizza obtained with this composition has a spongy appearance with different bubble granulometry. Its structure is flexible, has a good bite, similar to that of a pizza with gluten.

A feature of the combination for preparing a breadmaking composition of the invention is that it is a powdery composition which incorporates water very easily, allowing an easy kneading, with elasticity similar to that of a product with gluten, which allows obtaining a ball that maintains a stable shape without collapsing. In addition, with the use of this combination the traditional step of fermentation of the dough is avoided, while maintaining the yeast flavour. The mixture of all the components is combined with water, a dough is quickly formed which can be baked in the form of, for example, bread, tin loaf, or pizza.

Generally, about 90 g of water are added per 100 g of breadmaking composition of the invention. Preferably 10 g of oil, preferably olive oil, are added once the water has been absorbed.

Surprisingly, the combination of the invention enables the preparation of bakery products suitable for persons intolerant to gluten and also for celiac persons, by using a process of simple mixing and kneading, and having organoleptic and nutritional properties comparable to those of products with gluten, with high protein content, generally about 6% by weight in the finished bakery product.

Compared to commercial combinations for preparing gluten-free bread, the breadmaking composition of the invention has the following advantages: better dough handling, better appearance, more similar to traditional breads with gluten, better built, aerated and fluffy crumb, and a crisper and better looking crust.

As for pizza bases obtained from commercial combinations, the breadmaking composition of the invention allows to obtain pizza bases with significantly better handling before baking, superiority in appearance, structure and flavour, and elasticity and mouthfeel very similar to the pizza base with gluten.

In addition, the composition of the invention has high protein content, and in preferred embodiments also includes minerals and vitamins, as well as baker's yeast in the composition.

The invention includes the following embodiments:
1.- Combination for preparing a gluten-free breadmaking composition characterized in that it essentially consists of glutinous rice flour, hydroxypropylmethylcellulose, psyllium husk flour and flaxseed flour.
2.- Combination according to embodiment 1, characterized in that hydroxypropylmethylcellulose has between 19.0% and 24.0% of methoxy groups, and between 4.0% and 12.0% of 2-hydroxypropoxy groups.
3.- Combination according to embodiment 1 or 2, characterized in that the flaxseed is from golden flax.
4.- Combination according to any of embodiments 1 to 3, characterized in that the content of glutinous rice flour is comprised between 10% and 55% by weight on the total weight of the combination.
5.- Combination according to any of embodiments 1 to 4, characterized in that the content of hydroxypropylmethylcellulose is comprised between 4% and 45% by weight on the total weight of the combination.
6.- Combination according to any of embodiments 1 to 5, characterized in that the content of psyllium husk flour is comprised between 4% and 45% by weight on the total weight of the combination.
7.- Combination according to any of embodiments 1 to 6, characterized in that the content of the flaxseed flour is comprised between 20% and 60% by weight on the total weight of the combination.
8.- Combination according to any of embodiments 1 to 7, characterized in that it comprises between 20% and 40% by weight on the total weight of the combination of glutinous rice flour, between 10% and 35% by weight on the total weight of the combination of hydroxypropylmethylcellulose, between 7% and 25% by weight on the total weight of the combination of psyllium husk flour, and between 28% and 45% by weight on the total weight of the combination of golden flaxseed flour.
9.- Use of the combination of any of embodiments 1 to 8 for preparing a gluten-free breadmaking composition.
10.- Breadmaking composition comprising the combination of any of embodiments 1 to 8, gluten-free flour and/or gluten-free starch, leguminous protein, chemical yeast, salt and sugar.
11.- Composition according to embodiment 10, characterized in that the gluten-free flour is selected from the group consisting of rice, corn, millet, quinoa, buckwheat, amaranth, almond, chestnut, and mixtures thereof.
12.- Composition according to embodiment 11, characterized in that gluten-free flour is white rice flour.
13.- Composition according to embodiment 11 or 12, characterized in that the gluten-free starch is selected from the group consisting of corn, potato, tapioca, and mixtures thereof.
14.- Composition according to any one of embodiments 10 to 13, characterized in that it comprises a mixture of gluten-free flour and gluten-free starch.
15.- Composition according to embodiment 14, characterized in that it comprises a combination of white rice flour and corn starch.
16.- Composition according to any of embodiments 10 to 14, characterized in that the leguminous protein is selected from the group consisting of soy protein, pea protein, chickpea protein, lupine protein, and mixtures thereof.
17.- Composition according to embodiment 16, characterized in that it includes soy protein and/or pea protein.
18.- Composition according to any of embodiments 10 to 17, characterized in that it comprises dried baker's yeast of the species *Saccharomyces cerevisiae.*
19.- Composition according to any of embodiments 10 to 18, characterized in that it comprises minerals and vitamins.
20.- Composition according to embodiment 19, characterized in that it comprises calcium and magnesium.
21.- Composition according to embodiment 19, characterized in that it comprises a vitamin selected from the group consisting of vitamin K1, vitamin K2, vitamin D, vitamin D2, vitamin D3, vitamin B12, or a mixture thereof.
22.- Composition according to any of embodiments 10 to 21, characterized in that the content of the combination according to any of claims 1 to 8 is comprised between 9% and 27% by weight on the total weight of the composition.
23.- Composition according to any of embodiments 10 to 22, characterized in that the content of gluten-free flour and/or gluten-free starch is comprised between 55% and 70% by weight on the total weight of the composition.
24.- Composition according to any of embodiments 10 to 23, characterized in that the content of leguminous protein is comprised between 5% and 15% by weight on the total weight of the composition.
25.- Composition according to any of embodiments 10 to 24, characterized in that it comprises:
   a) between 50% and 60% by weight of corn starch,
   b) between 5% and 15% by weight of white rice flour,
   c) between 2% and 8% by weight of glutinous rice flour,
   d) between 1 % and 6% by weight of hydroxypropylmethylcellulose,
   e) between 1 % and 7% by weight of psyllium husk flour,
   f) between 2% and 10% by weight of flaxseed flour, preferably from golden flax,
   g) between 5% and 15% by weight of soy protein, and
   h) appropriate amounts of chemical yeast, salt, sugar, and dried baker's yeast of the species *Saccharomyces cerevisiae,*
   wherein the sum of all components is 100%.
26.- Composition according to any of the embodiments 10 to 24, characterized in that it comprises:
   a) between 50% and 60% by weight of corn starch,
   b) between 5% and 15% by weight of white rice flour,
   c) between 2% and 8% by weight of glutinous rice flour,
   d) between 1 % and 6% by weight of hydroxypropylmethylcellulose,
   e) between 1 % and 7% by weight of psyllium husk flour,
   f) between 2% and 10% by weight of flaxseed flour, preferably of golden flax,
   g) between 5% and 15% by weight of pea protein, and
   h) appropriate amounts of chemical yeast, salt, sugar, and dried baker's yeast of the species *Saccharomyces cerevisiae,*
   wherein the sum of all components is 100%.
27.- Bakery product comprising the combination of any of the embodiments 1 to 8.
28.- Bakery product comprising the breadmaking composition of any of the embodiments 10 to 26.
29.- Bakery product according to embodiment 27 or 28, characterized in that it is selected from the group consisting of breads, baguettes, loaves, "regañás", pizzas, grissini, foccacia, quiches, biscuits, cakes, muffins, king cake, churros, pasties, pies, falafel, and Mexican tortillas.
30.- Use of the breadmaking composition of any of embodiments 10 to 26 for preparing a food product.

Various examples are given below for illustrating invention, without limiting it.

### Examples

### Examples 1 to 9: Preparation of bread and pizza base

### A) Breadmaking compositions

A composition containing the solid ingredients listed in Table I was prepared by simple mixture of each of the components, wherein the amounts express the weight percentage of each ingredient over the total composition:

**TABLE I**

| **Ingredient** / **Example** | **1** |
|---|---|
| Corn starch | 54.5 |
| White rice flour | 9 |
| Glutinous rice flour | 5 |
| HPMC (type 2208) | 3 |
| Psyllium husk flour | 4 |
| Golden flaxseed flour | 6 |
| Soy protein | 9 |
| Sodium chloride, sucrose, dry baker's yeast, chemical yeast, vitamins and minerals | q.s. 100 |

Following a procedure of mixing solids substantially analogous to that described in Example 1, different breadmaking compositions were prepared following a 2³ factorial design, covering a cube-shaped design space around the composition of Example 1, which is located in the centre of it. The factors and levels (in % by weight on the total weight of the composition) of this design are shown in Table II:

**TABLE II**

| Factor | Low level | Medium level | High level |
|---|---|---|---|
| Glutinous rice flour | 2 | 5 | 8 |
| HPMC | 1 | 3 | 6 |
| Psyllium husk flour | 1 | 4 | 7 |

The compositions prepared according to the mentioned factorial design are shown in Tables III and IV, and present differences in the content of glutinous rice flour, HPMC, psyllium husk flour, and corn starch, with respect to Example 1. The corn starch was used as component to complete the formulation. The amounts express the percentage by weight of each of the ingredients on the total weight of the composition:

**TABLE III**

| **Ingredient** / **Example** | **2** | **3** | **4** | **5** |
|---|---|---|---|---|
| Corn starch | 62.5 | 56.5 | 57.5 | 51.5 |
| Glutinous rice flour | 2 | 8 | 2 | 8 |
| HPMC | 1 | 1 | 6 | 6 |
| Psyllium husk flour | 1 | 1 | 1 | 1 |

**TABLE IV**

| **Ingredient** / **Example** | **6** | **7** | **8** | **9** |
|---|---|---|---|---|
| Corn starch | 56.5 | 50.5 | 51.5 | 45.5 |
| Glutinous rice flour | 2 | 8 | 2 | 8 |
| HPMC | 1 | 1 | 6 | 6 |
| Psyllium husk flour | 7 | 7 | 7 | 7 |

### B) Bread

Bread was prepared from each of the breadmaking compositions of Examples 1 to 9, according to the following procedure:
50 g of the breadmaking composition were weighed in a mixing bowl, 45 g of tap water were added and the mixture was blended. When the water was absorbed, 5 g of olive oil with an acidity of 0.4° were added. The mixture was blended again until the oil was integrated into the dough. The dough was put on the table to be kneaded for 1 minute, by folding it on itself during that minute and then it was shaped into a bun.

With a sharp and wet knife, a cross cut of a couple of millimetres depth was made on the top of the bun.

The oven was preheated to 220°C, and once the bread was introduced, the temperature was set at 200°C, and it was baked for 30'.

Once baked, the bread was removed from the oven and allowed to cool to room temperature on a grate.

During the preparation of the bread the behaviour of the dough was evaluated before baking, as well as the organoleptic properties of the bread once stabilized at room temperature.

The dough obtained from each of the breadmaking compositions of Examples 1 to 9 has been handled normally, mixed fluidly, and a ball has been formed with it which has maintained its shape stably without collapsing.

The organopleptic properties of the bread obtained in the mentioned examples are the following:
- Aspect: outer crust with a good light golden colour, good scoring.
- Structure: the crumb is aerated, soft, and returns when pressed.
- Taste: good taste with yeast aftertaste, softly chewed.

### C) Pizza base

With the breadmaking compositions described in Examples 1 to 9, pizza bases were prepared according to the following procedure.

100 g of the composition of each of Examples 1 to 9 were weighed in a mixing bowl, 90 g of tap water were added and the mixture was blended. After the water was absorbed, 10 g of olive oil of 0.4° acidity were added, and the mixture was blended again until the oil was integrated into the dough.

The dough was put on the table to knead the ball as follows: fold in half, smash and stretch, repeatedly, turning at each step, for 2 minutes. It was flattened with a roller making it round-shaped and with a thickness of 3.5 millimetres and it was introduced into the pre-heated oven at 210°C for 4' for sealing the pizza base.

Once baked, the pizza base was removed from the oven and allowed to cool to room temperature on a grate.

During the preparation of the pizza base, the behaviour of the dough was evaluated before baking, as well as the organoleptic properties of the pizza once stabilized at room temperature.

The dough obtained in Examples 1 to 9 was handled normally, mixed fluidly, and the pizza dough was shaped by adding flour to the table so that it would not stick.

The organoleptic properties of the pizza base obtained in these examples are as follows:
- Appearance: 3 mm thick, fluffy with bubbles of different granulometry.
- Structure: flexible, good bite, similar to gluten pizza.
- Taste: sweet.

Tests were performed with pea protein instead of soy protein, and similar results were obtained. In these tests 10.6% by weight of pea protein was used instead of 9% by weight of soy protein. The composition was adjusted to 100% by reducing the amount of corn starch.

### Comparative examples 1 to 3: Bread preparation

Following an analogous procedure to that described in Example 1, compositions were prepared with the differences shown in Table V:

**TABLE V**

| Example | HPMC | Psyllium husk flour | Glutinous rice flour |
|---|---|---|---|
| Example 1 | Yes | Yes | Yes |
| Comparative 1 | No | Yes | Yes |
| Comparative 2 | Yes | No | Yes |
| Comparative 3 | Yes | Yes | No |

In each of the compositions the missing component was replaced by corn starch.

The dough obtained in these examples had the following characteristics:
Example 1: it was handled normally, mixed fluidly, and a ball was formed with it which maintained its shape stably, without collapsing
Comparative example 1: it presented dilating fluid property similar to that of corn starch, less hardness and better handling when being shaped compared to the dough of Example 1.
Comparative example 2: once formed, the structure was not maintained and the bread became flattened, and after a few minutes it began to crack.
Comparative example 3: no difference was noticed while shaping it, compared to the bread of Example 1.

With such compositions bread was prepared following a procedure analogous to that described in Example 1, section B. The organoleptic properties of the bread obtained in the mentioned examples were as follows:

### Example 1, section B)

- Appearance: outer crust with good light gold colour, good scoring.
- Structure: the crumb is aerated, soft, and returns when pressed.
- Taste: good taste with yeast aftertaste, softly chewed.

### Comparative example 1

- Appearance: very hard outer crust, with spots, the scoring was half-open because the bread did not rise in the oven.
- Structure: very dense and compact crumb, like marzipan.
- Taste: analogous to that of Example 1.

### Comparative example 2

- Appearance: crust with many spots and very cracked, more flattened than that obtained in the other examples.
- Structure: dry when swallowed, very hard crust when chewed.
- Taste: analogous to that of Example 1.

### Comparative example 3

- Appearance: good appearance, good rise.
- Structure: cavities inside the crumb, very hard crust.
- Taste: analogous to that of Example 1.

The assessment of the doughs before baking and of the breads prepared with the composition of the invention and with the compositions of the comparative examples is summarized in Table VI:

**TABLE VI**

| Example | HPMC | Psyllium husk flour | Glutinous rice flour | Dough | Bread |
|---|---|---|---|---|---|
| Example 1 | Yes | Yes | Yes | Well | Well |
| Comparative 1 | No | Yes | Yes | Wrong | Wrong |
| Comparative 2 | Yes | No | Yes | Wrong | Wrong |
| Comparative 3 | Yes | Yes | No | Well | Wrong |

### Comparative examples 4 to 6: Pizza base preparation

With the compositions described in Comparative Examples 1 to 3, pizza bases were prepared according to a procedure substantially analogous to that described in Example 1, section C.

The dough obtained in these examples has the following characteristics:
Example 1, section C: normally handled, fluidly mixed, and the pizza dough was shaped by adding flour to the table so that it would not stick.
Comparative example 4: it has dilating fluid property similar to corn starch, less hardness and better handling while being shaped compared to Example 1, there was no need to put flour on the table for it not to stick because it did not stick.
Comparative example 5: very difficult to shape due to poor structural stability.
Comparative example 6: it was well stretched and kneaded correctly by putting a little flour on the table so that it would not stick.

The organoleptic properties of the pizza bases obtained in these examples are as follows:

### Example 1, section C)

- Appearance: 3 mm thick, spongy with bubbles of different granulometry.
- Structure: flexible, good bite, similar to gluten pizza.
- Taste: sweet.

### Comparative example 4

- Appearance: it has not bubbled, it was like bread.
- Structure: flattened bread, low in elasticity, brittle, bite similar to bread.
- Taste: no noticeable differences regarding Example 1.

### Comparative example 5

- Appearance: brittle appearance, uneven edges.
- Structure: brittle, without elasticity.
- Taste: no noticeable differences regarding Example 1.

### Comparative example 6

- Appearance: inner bubbles that broke uniformity when cutting a portion.
- Structure: low in elasticity, brittle.
- Flavour: no noticeable differences regarding Example 1.

Table VII summarizes the assessment of the doughs before baking and of the pizzas prepared with the composition of the invention and with the compositions of the comparative examples:

**TABLE VII**

| Example | HPMC | Psyllium husk flour | Glutinous rice flour | Dough | Pizza |
|---|---|---|---|---|---|
| Example 1 | Yes | Yes | Yes | Well | Well |
| Comparative 4 | No | Yes | Yes | Well | Wrong |
| Comparative 5 | Yes | No | Yes | Wrong | Wrong |
| Comparative 6 | Yes | Yes | No | Well | Wrong |

After studying the properties of the different breads and pizzas, it was observed that the replacement of any one of the components tested (HPMC, psyllium husk flour and glutinous rice flour) by corn starch causes an evident deterioration in both the appearance and the structure, losing elasticity, the rate of rupture is increased and the bite worsens, being taste the property less affected by these changes.

### Comparative example 7: Preparation of bread and pizza without golden flaxseed flour

A composition analogous to that of Example 1 was prepared by mixing the powdered components, but without including golden flaxseed flour.

With such composition, bread was prepared following a procedure analogous to that described in Example 1, section B). It was observed that the dough was more difficult to work, that the ingredients were not well bound, and being sticky, flour was necessary for it to be worked. Once baked, the bread had not risen, the crumb had a very tight structure, without air. The sensation in the hand was that of a stone.

A pizza base with the same composition was also prepared following a procedure analogous to that described in Example 1, section (C). It was observed that the dough was more difficult to work, that the ingredients were not well bound, and being sticky, flour was needed for it to be worked. The elasticity of the dough was lower than the one obtained with the breadmaking composition of the invention of Example 1. The pizza obtained with that dough had no bubbles, had not risen, and the structure was not elastic.

### Comparative example 8: Preparation of bread and pizza base from a commercial composition

The composition employed in Example 8 comprised corn starch, rice flour, lupine protein, dextrose, apple fibre and HPMC.

To prepare the bread dough the following procedure was employed: 50 g of the commercial composition was weighed, 1.67 g of dried baker's yeast was added thereto, the blend was well mixed and then 33.3 g of warm water (at a temperature of 35° C), half a tablespoon of olive oil of 0.4° acidity, and a pinch of salt were added. All ingredients were mixed and smooth dough was formed. The dough was placed on the work surface and it was then worked with slightly floured hands. A roll was formed, a baking paper was placed on a tray and the roll was placed on it. It was covered with a wet cloth, waiting until it doubled the volume, approximately 30 minutes, following the instructions of the commercial composition. It was placed in a preheated oven at medium height and it was baked during 25 minutes at 200° C.

To prepare the dough for the pizza base the following procedure was employed: 100 g of commercial composition, 3.3 g of dried baker's yeast, 1 teaspoon of olive oil of 0.4° acidity, 66.7 g of warm water (at a temperature of 35° C), and a pinch of salt were used. All ingredients were mixed and smooth dough was formed. The dough was placed on the work surface and it was then worked with slightly floured hands. The dough was spread on a baking tray greased with oil, it was covered with a wet cloth and left to stand for 40 minutes, following the instructions of the commercial composition. It was placed in the preheated oven at medium height and baked at 220° C during 35 minutes.

The dough prepared with the commercial composition was handled well and could be correctly shaped like a roll or pizza base.

For the same amount of flour, the bread obtained in Comparative Example 8 yielded much less than the one obtained with a breadmaking composition of the invention, achieving a smaller size, and the scoring was not well formed. In the inside, the crumb was flattened, the crust was very hard and the inside was little airy and compact. The taste of the bread was pleasant.

The pizza base obtained did not show bubbles, the structure was low in elasticity and rather dry, with an unpleasant structure.

### Comparative example 9: Preparation of bread and pizza base from a commercial composition

The composition used in Example 9 comprised corn starch, corn flour, dextrose, salt, guar gum, HPMC, sodium carboxymethylcellulose, monoacetyltartaric and diacetyltartaric esters of mono- and diglycerides of fatty acids, mono- and diglycerides of fatty acids, calcium orthophosphate, sodium carbonate, pentasodium triphosphate, ascorbic acid and sorbic acid.

The bread dough and pizza base dough were prepared according to the following procedure: 150 g of commercial composition, 30 g of margarine, 6 g of dried baker's yeast and 150 mL of water were mixed. It was kneaded until a fine, homogeneous dough was obtained. A roll was made with a third of the dough, and a pizza base with the rest. They were left to ferment, covering them with a cloth for about between 45 and 60 minutes. They were baked in a preheated oven at 210° C for about 30 minutes.

The dough obtained with the commercial composition was handled with difficulty, being extremely difficult to form the roll or the base of the pizza, due to its stickiness. It had a soft spongy structure.

The bread obtained in Comparative Example 9 yielded less for the same amount of flour in comparison to the bread obtained with the breadmaking composition of the invention, it did not rise, had bad scoring , and the crust was very soft. The interior of the bread had a humid, muffin-like appearance, the crumb did not return when pressed, but remained flattened instead. The taste was unappetizing.

The pizza base had a quite unpleasant yellowish colour, with a gel-like texture. In fact, it broke easily, and was not elastic.

Compared to the commercial combinations for preparing gluten-free bread of Examples 8 and 9, the breadmaking composition of the invention has the following advantages: better dough handling, better appearance, more similar to traditional gluten breads, better built, aerated and spongy crumb, and a crisper and better looking crust.

As for the pizza bases obtained from the commercial combinations of Examples 8 and 9, the breadmaking composition of the invention allows obtaining pizza bases with significantly better handling before baking, superiority in appearance, structure and flavour, and an elasticity and mouthfeel very similar to that of the pizza base with gluten.

## Claims

1. Combination for preparing a gluten-free breadmaking composition **characterized in that** it essentially consists of glutinous rice flour, hydroxypropylmethylcellulose, psyllium husk flour and flaxseed flour.

2. Combination according to claim 1, **characterized in that** the flaxseed is from golden flax.

3. Combination according to claims 1 or 2, **characterized in that** the content of glutinous rice flour is comprised between 10% and 55% by weight on the total weight of the combination.

4. Combination according to any of claims 1 to 3, **characterized in that** the content of hydroxypropylmethylcellulose is comprised between 4% and 45% by weight on the total weight of the combination.

5. Combination according to any of claims 1 to 4, **characterized in that** the content of psyllium husk flour is comprised between 4% and 45% by weight on the total weight of the combination.

6. Combination according to any of claims 1 to 5, **characterized in that** the content of the flaxseed flour is comprised between 20% and 60% by weight on the total weight of the combination.

7. Use of the combination of any of claims 1 to 6 for preparing a gluten-free breadmaking composition.

8. Breadmaking composition comprising the combination of any of claims 1 to 6, gluten-free flour and/or gluten-free starch, leguminous protein, chemical yeast, salt and sugar.

9. Composition according to claim 8, **characterized in that** it comprises a mixture of white rice flour and corn starch.

10. Composition according to claims 8 or 9, **characterized in that** the leguminous protein is selected from the group consisting of soy protein, pea protein, chickpea protein, lupine protein, and mixtures thereof.

11. Composition according to any of claims 8 to 10, **characterized in that** it comprises dried baker's yeast of the species *Saccharomyces cerevisiae.*

12. Composition according to any of claims 8 to 11, **characterized in that** it comprises minerals and vitamins.

13. Bakery product comprising the combination of any of claims 1 to 6.

14. Bakery product comprising the breadmaking composition of any of claims 8 to 12.

15. Use of the breadmaking composition of any of claims 8 to 12 for preparing a food product.
